(19) **Europäisches Patentamt European Patent Office Office européen des brevets**

(11) **EP 2 617 985 B1**

(12) **FASCICULE DE BREVET EUROPEEN**

(45) Date de publication et mention de la délivrance du brevet:
**09.09.2015 Bulletin 2015/37**

(21) Numéro de dépôt: **13151472.1**

(22) Date de dépôt: **16.01.2013**

(51) Int Cl.:
*F03C 1/047* (2006.01)     *F04B 1/047* (2006.01)
*F04B 1/107* (2006.01)     *F04B 49/00* (2006.01)
*B60K 17/10* (2006.01)     *F15B 11/042* (2006.01)
*F16H 61/40* (2010.01)     *F16H 61/452* (2010.01)
*F03C 1/04* (2006.01)     *F03C 1/247* (2006.01)

(54) **Circuit de transmission hydraulique à cylindrées multiples**

Hydraulische Getriebevorrichtung mit mehreren Zylindern

Hydraulic transmission System with multiple cylinders

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.01.2012 FR 1250481**

(43) Date de publication de la demande:
**24.07.2013 Bulletin 2013/30**

(73) Titulaire: **Poclain Hydraulics Industrie 60410 Verberie (FR)**

(72) Inventeurs:
• **Recoura, Clément**
  **60420 Mery la Bataille (FR)**
• **Charrier, Guillaume**
  **37150 Le Croix en Touraine (FR)**

(74) Mandataire: **Duflos, Bertrand Guillaume et al Cabinet Beau de Loménie 158, rue de l'Université 75340 Paris Cedex 07 (FR)**

(56) Documents cités:
**WO-A2-2010/076542     DE-A1- 19 833 942
DE-A1-102008 000 095     FR-A1- 2 719 001
FR-A1- 2 828 544**

**Description**

L'invention concerne un circuit de transmission hydraulique comprenant :

- deux conduits principaux, respectivement pour l'alimentation en fluide et l'échappement de fluide ;
- trois ou quatre moteurs élémentaires hydrauliques associés pour un même entrainement ;
- chacun de ces moteurs élémentaires présentant une première enceinte secondaire pour une alimentation de fluide et une deuxième enceinte secondaire pour un échappement de fluide ;
  ces moteurs délivrant des couples de sortie de même sens lorsqu'ils sont alimentés via leurs premières enceintes secondaires respectives ;
- une première, une deuxième, une troisième et une quatrième valve de distribution ;

chacune de ces valves de distribution présentant une voie de sortie et deux voies d'entrée, et étant apte à relier sélectivement la voie de sortie avec sélectivement l'une ou l'autre desdites voies d'entrée ;
lesdites deux voies d'entrée desdites valves de distribution étant reliées respectivement auxdits deux conduits principaux.

Dans ce circuit en outre, les voies de sortie des première et deuxième valves sont reliées à au moins une première enceinte secondaire des moteurs élémentaires.

Par 'moteur élémentaire hydraulique', on désigne ici soit un moteur hydraulique, soit un sous-moteur d'un moteur hydraulique, ce sous-moteur étant une partie du moteur hydraulique capable lorsqu'elle est alimentée seule, de fournir un couple moteur (non nul) à l'organe de sortie du moteur, et cela quelle que soit la position angulaire de cet organe de sortie par rapport à la structure fixe du moteur. De préférence, le couple délivré par le sous-moteur est sensiblement indépendant de la position angulaire de l'organe de sortie du moteur par rapport à la structure fixe du moteur. Il s'ensuit qu'un sous-moteur, lorsqu'il est alimenté seul, est capable de fournir un travail similaire à celui fourni par le moteur complet, mais avec une vitesse de rotation et un couple différents de ceux du moteur complet, la cylindrée du sous-moteur étant différente de celle du moteur complet. L'invention vise en particulier un circuit comprenant des moteurs élémentaires hydrauliques de type à pistons radiaux. Ces moteurs élémentaires comportent notamment des pistons coulissants dans des cylindres, les cylindres étant disposés radialement autour de l'axe de rotation du moteur.

Par exemple, les circuits de transmission hydraulique que vise l'invention peuvent servir à l'entraînement en translation d'un engin ou à l'entraînement d'un outil porté par un engin. Les moteurs élémentaires peuvent alors être des moteurs distincts, par exemple, pour entrainer des roues distinctes de l'engin.

Au sens de l'invention, deux moteurs élémentaires associés pour un même entraînement sont deux moteurs élémentaires reliés par un moyen mécanique, par exemple un arbre, une courroie, un engrenage, ou encore agissant sur un même élément pour provoquer un même effet sur ou par rapport à celui-ci. Par exemple, les deux moteurs élémentaires entraînent deux roues distinctes d'un véhicule, et ainsi agissent toutes deux sur un même sol pour faire avancer le véhicule dont le circuit fait partie.

Un circuit tel que celui défini en introduction est divulgué par la demande internationale PCT/FR2009/052719 au nom de la demanderesse.

Cependant, le circuit présenté par cette demande internationale ne peut être opéré qu'avec un nombre limité de cylindrées distinctes, à savoir en l'occurrence, six cylindrées positives et six cylindrées négatives (Par cylindrée 'positive' ou 'négative', on désigne ici, en se référant à un sens prédéterminé de circulation du fluide, des cylindrées pour lesquelles respectivement le fluide circule dans le sens prédéterminé, ou en sens inverse de celui-ci.)

Or, comme l'indique ladite demande internationale, il existe un besoin de circuits hydrauliques présentant un nombre élevé de cylindrées différentes, et ayant grâce à cela une grande souplesse de fonctionnement permettant de varier les vitesses et le couple moteur afin d'adapter le fonctionnement de l'engin en fonction des circonstances.

Un premier objet de l'invention est donc de proposer un circuit de transmission hydraulique du type présenté en préambule, et bénéficiant d'une souplesse d'utilisation élevée grâce à la possibilité de fonctionnement avec de multiples cylindrées.

Cet objectif est atteint grâce au fait que dans le circuit :

- les voies de sortie desdites troisième et quatrième valves sont reliées à au moins une desdites secondes enceintes secondaires des moteurs élémentaires ;
- chacun des moteurs élémentaires est relié uniquement à une paire de valves, constituée par la valve parmi les première et deuxième valve de distribution à laquelle la première enceinte secondaire du moteur considéré est reliée, et la valve parmi les troisième ou quatrième valve de distribution à laquelle la seconde enceinte secondaire du moteur considéré est reliée ; et
- les paires de valves associées aux différents moteurs élémentaires sont toutes distinctes deux à deux.

Ainsi, dans ce circuit on ne peut identifier deux moteurs élémentaires distincts, dont les premières enceintes secondaires soient toutes deux reliées à une même valve de distribution (constituant donc une valve d'alimentation commune), et dont conjointement les secondes enceintes secondaires soient toutes deux reliées à une même valve de distribution (constituant donc une valve d'échappement commune).

Grâce à l'agencement du circuit selon l'invention, celui-ci présente un nombre élevé de cylindrées, du fait que les différents moteurs élémentaires peuvent être opérés par les quatre valves dans différents modes de fonctionnement présentant sept cylindrées positives et sept cylindrées négatives distinctes.

Dans un premier mode de réalisation, le circuit comprend trois moteurs élémentaires. Les voies de sortie des première, deuxième, troisième et quatrième valves de distribution sont alors reliées respectivement :

- aux premières enceintes secondaires des premier et deuxième moteurs élémentaires ;
- à la première enceinte secondaire du troisième moteur élémentaire ;
- à la deuxième enceinte secondaire du premier moteur élémentaire ;
- aux deuxièmes enceintes secondaires des deuxième et troisième moteurs élémentaires.

Dans ce mode de réalisation, le circuit hydraulique peut être opéré suivant la table d'activation suivante :

| Gorges | | | | Moteurs | | | Cylindrée |
|---|---|---|---|---|---|---|---|
| G1 | G2 | G3 | G4 | M1 | M2 | M3 | |
| 0 | 0 | 0 | 0 | 0 | 0 | 0 | 0 |
| 0 | 0 | 0 | 1 | 0 | -1 | -1 | -Cyl2-Cyl3 |
| 0 | 0 | 1 | 0 | -1 | 0 | 0 | -Cyl1 |
| 0 | 0 | 1 | 1 | -1 | -1 | -1 | -Cyl1-Cyl2-Cyl3 |
| 0 | 1 | 0 | 0 | 0 | 0 | 1 | Cyl3 |
| 0 | 1 | 0 | 1 | 0 | -1 | 0 | -Cyl2 |
| 0 | 1 | 1 | 0 | -1 | 0 | 1 | -Cyl1+Cyl3 |
| 0 | 1 | 1 | 1 | -1 | -1 | 0 | -Cyl1-Cyl2 |
| 1 | 0 | 0 | 0 | 1 | 1 | 0 | Cyl1+Cyl2 |
| 1 | 0 | 0 | 1 | 1 | 0 | -1 | Cyl1-Cyl3 |
| 1 | 0 | 1 | 0 | 0 | 1 | 0 | Cyl2 |
| 1 | 0 | 1 | 1 | 0 | 0 | -1 | -Cyl3 |
| 1 | 1 | 0 | 0 | 1 | 1 | 1 | Cyl1+Cyl2+Cyl3 |
| 1 | 1 | 0 | 1 | 1 | 0 | 0 | Cyl1 |
| 1 | 1 | 1 | 0 | 0 | 1 | 1 | $Cyl_2$+Cyl3 |
| 1 | 1 | 1 | 1 | 0 | 0 | 0 | 0 |

Dans ce tableau, les gorges du moteur sont numérotées de G1 à G4. Les moteurs élémentaires M1, M2 et M3 présentent en outre des cylindrées respectives égales ou différentes Cyl1, Cyl2 et Cyl3.

On constate donc que le circuit ainsi constitué présente sept cylindrées positives et sept cylindrées négatives (sous l'hypothèse complémentaire que les 3 moteurs élémentaires M1 M2 et M3 sont de cylindrées différentes et que la somme des deux plus petites cylindrées n'est pas égale à la plus grande cylindrée).

En considérant que les cylindrées respectives Cyl1, Cyl2 et Cyl3 sont décroissantes, les sept cylindrées positives sont respectivement Cyl1, Cyl2, Cyl3, Cyl1+Cyl2, Cyl1-Cyl3, Cyl2+Cyl3, Cyl1+Cyl2+Cyl3.

Il y a donc une configuration de soustraction de cylindrée Cyl1-Cyl3. Dans cette cylindrée, le fluide circule partiellement en boucle dans le moteur sans transiter par le reste du circuit hydraulique.

Le circuit selon l'invention peut également comprendre quatre moteurs élémentaires plutôt que trois. Les trois premiers moteurs élémentaires sont alors raccordés aux valves de distribution de la même manière que dans le circuit précédent comprenant trois moteurs élémentaires. De plus, le quatrième moteur élémentaire est raccordé de la façon suivante :

- La première enceinte secondaire du quatrième moteur élémentaire est reliée à la sortie de la deuxième valve ; et
- la seconde enceinte secondaire du quatrième moteur élémentaire est reliée à la sortie de la troisième valve.

Le circuit ainsi constitué présente également sept cylindrées positives et sept cylindrées négatives (sous l'hypothèse complémentaire que les quatre moteurs élémentaires M1 M2 M3 et M4 ont de cylindrée différente et que la somme des deux cylindrées n'est pas égale à la somme des cylindrées complémentaires).

Les possibilités de mise en communication des enceintes secondaires des différents moteurs élémentaires avec l'un ou l'autre des conduits principaux, offertes par les valves de distribution, permettent d'exploiter les moteurs élémentaires dans l'un des quatre modes de fonctionnement suivants :

- Inactif haute pression, les deux enceintes étant portées à la pression du circuit principal de plus haute pression (on parlera pour simplifier de la 'haute pression de la pompe') ;
- Inactif basse pression, les deux enceintes étant portées à la pression du circuit principal de plus basse pression (on parlera pour simplifier de la 'basse pression de la pompe') ;
- moteur, les deux enceintes étant respectivement à la haute et à la basse pression de la pompe et le couple délivré étant moteur dans un sens d'entrainement souhaité pour l'engin dont le circuit fait partie ;
- antagoniste, les deux enceintes étant respectivement à la haute et à la basse pression de la pompe et le couple délivré étant un couple appliqué dans le sens opposé au sens d'entrainement souhaité pour l'engin dont le circuit fait partie.

On précise enfin que chacun des moteurs élémentaires comporte une structure fixe et un organe de sortie, et est capable lorsqu'il est alimenté seul, de fournir un couple moteur non nul à cet organe de sortie, quelle que soit la position angulaire de ce dernier par rapport à la structure fixe du moteur élémentaire. Il s'ensuit qu'un moteur élémentaire ne peut être agencé autour d'un cylindre unique contenant un piston, et monté à rotation relative par rapport à une came sur laquelle le piston agirait radialement. Un ensemble ainsi agencé ne peut pas en effet délivrer un couple moteur non nul quelle que soit sa position angulaire.

De préférence, les moteurs élémentaires du circuit selon l'invention sont homocinétiques (Un moteur homocinétique est un moteur dans lequel, lorsque le débit de fluide injecté dans le moteur est constant, la vitesse de rotation de la partie tournante du moteur (bloc-cylindres ou came) est sensiblement constante).

Avantageusement, ces moteurs élémentaires peuvent faire partie d'un même moteur hydraulique, et être intégrés dans le carter de celui-ci.

On appelle rapport d'ouverture dans un moteur - ou par extension, dans un circuit hydraulique comportant des moteurs hydrauliques associés pour un même entrainement - le rapport entre une cylindrée et la plus grande cylindrée du moteur (ou du circuit). Plus ce rapport est grand, plus il est nécessaire d'introduire des étages de cylindrées intermédiaires. Plus ce nombre d'étages discrets est important, plus on se rapproche d'une cylindrée continûment variable.

Avantageusement, le circuit selon l'invention présente un rapport d'ouverture élevé. Le rapport d'ouverture minimum est en effet de trois pour un moteur à trois moteurs élémentaires (obtenu avec des cylindrées identiques).

Les cylindrées respectives des moteurs élémentaires peuvent être choisies de manière à optimiser l'étagement des différentes cylindrées globales du circuit.

En général, on conçoit le circuit de telle sorte qu'il présente un rapport d'ouverture maximal élevé, et des cylindrées globales bien réparties ou étagées. D'autres critères de dimensionnement peuvent être pris en compte, comme par exemple une différence de taille maximale entre les différents moteurs élémentaires.

Dans un mode de réalisation, les cylindrées non nulles constituent une suite sensiblement géométrique, en particulier lorsque le circuit comporte une pompe à plateau-came, qui assure l'alimentation des moteurs élémentaires. En effet, lors du passage d'une cylindrée à une cylindrée plus faible, la cylindrée de la pompe doit s'ajuster quasi-instantanément à la réduction de cylindrée de ces moteurs. Si la répartition des cylindrées est géométrique, avantageusement en cas de diminution de cylindrée, le plateau came doit toujours réduire sa cylindrée d'un même ratio.

Par exemple, dans un mode de réalisation les trois moteurs élémentaires présentent des cylindrées non nulles Cyl1, Cyl2, et Cyl3 telles que :

$$(12/13) \times \text{Cyl1} = \text{Cyl2} = (11/12) \times \text{Cyl3}$$

Avantageusement, ces rapports entre les cylindrées des moteurs élémentaires permettent de réaliser un moteur avec une ouverture maximale de six et un étagement des cylindrées formant une suite sensiblement géométrique. Le rapport d'ouverture est bien de six car la plus petite cylindrée (Cyl1 -Cyl3) est d'un sixième de la pleine cylindrée. En outre, la répartition des cylindrées se rapproche d'une suite géométrique.

Dans un mode de réalisation, le circuit comporte en outre un accumulateur de fluide apte à stocker une énergie mécanique transmise par les moteurs élémentaires, puis à restituer cette énergie aux moteurs élémentaires. Dans un tel circuit, les cylindrées non nulles constituent de préférence une suite sensiblement arithmétique. En effet grâce à cette caractéristique, l'étagement régulier des différentes cylindrées permet avantageusement de réguler finement le couple appliqué à la roue (ou à l'organe entraîné par les moteurs élémentaires), indépendamment de la pression dans l'accumulateur de fluide.

Par suite sensiblement géométrique ou respectivement sensiblement arithmétique, on désigne une suite dans laquelle les ratios entre deux termes consécutifs - ou respectivement les différences entre deux termes consécutifs ne diffèrent pas de plus de 20% (c'est-à-dire que pour une suite géométrique, le plus grand ratio n'excède pas 1,2 x le plus petit ratio ; et que pour une suite arithmétique, la plus grande différence n'excède pas 1,2 x la plus petite différence).

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :

- la figure 1 est une vue schématique d'un circuit de transmission hydraulique dans le mode de réalisation de l'invention comportant seulement trois moteurs élémentaires ;
- la figure 2 est une coupe longitudinale d'un moteur comprenant trois sous-moteurs, constituant un circuit selon l'invention ;
- la figure 3 est une coupe axiale, au niveau du bloc-cylindres, du moteur représenté en figure 2, suivant la coupe A-A ;
- la figure 4 est une vue schématique d'un circuit de transmission hydraulique selon l'invention, constituant un circuit de récupération d'énergie.
- la figure 5 est une vue schématique d'un circuit de transmission hydraulique dans un second mode de réalisation de l'invention, comportant quatre moteurs élémentaires.

On notera que sauf mention contraire, les circuits présentés peuvent comporter des éléments supplémentaires non représentés, et notamment les éléments habituels et bien connus dans les circuits hydrauliques, tels que des pompes de gavage, des dispositifs anti-surpression, etc.

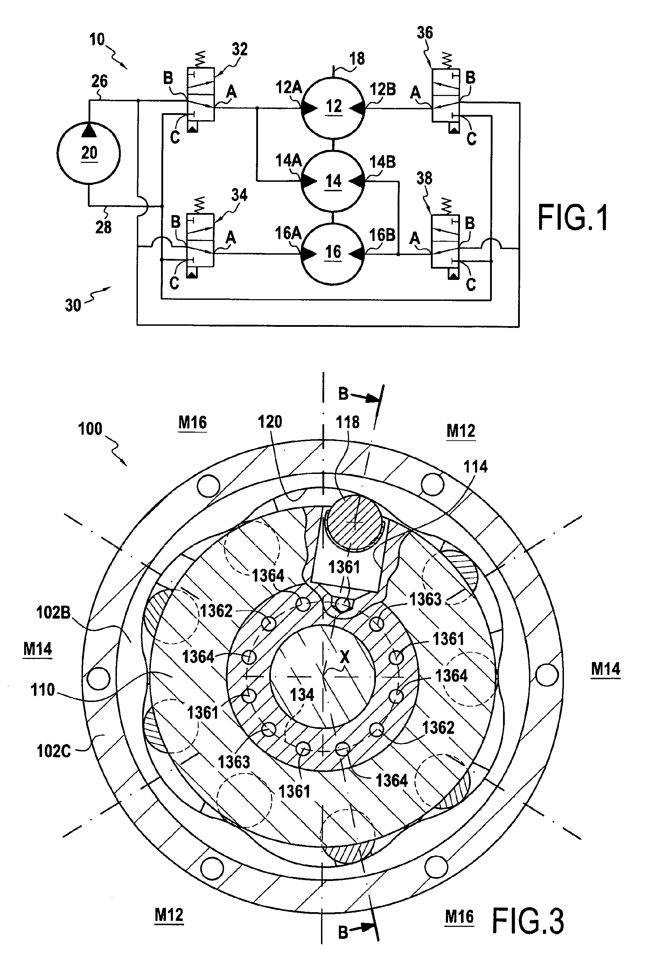

En faisant référence à la figure 1, un circuit de transmission hydraulique selon l'invention va maintenant être décrit.

Ce circuit 10 comporte trois moteurs élémentaires M12, M14, M16. Ces trois moteurs élémentaires délivrent leurs couples respectifs sur un même arbre de sortie18. Chaque moteur élémentaire comporte une première enceinte secondaire (enceintes 12A, 14A, 16A) pour une alimentation de fluide et une deuxième enceinte secondaire pour un échappement de fluide (enceintes 12B, 14B, 16B). Comme il sera expliqué plus loin, certaines de ces enceintes peuvent être communes à plusieurs moteurs élémentaires.

Le circuit 10 comporte en outre une pompe hydraulique 20, et deux conduits principaux 26 et 28 reliés aux deux orifices principaux de celle-ci, prévus pour l'alimentation et l'échappement de fluide des différents moteurs élémentaires du circuit 10.

Le circuit 10 comporte également un distributeur de fluide 30 pour distribuer le fluide depuis les conduits principaux 26 et 28 vers les moteurs élémentaires M12, M14, et M16.

Le distributeur de fluide 30 comporte quatre valves de distribution 32, 34, 36 et 38. Ces quatre valves sont des valves à commande hydraulique, identiques les unes aux autres. Elles sont désignées collectivement comme les valves'3x'.

Chacune de ces valves comporte une voie de sortie A et deux voies d'entrée B,C. La voie de sortie A est reliée à la voie d'entrée B lorsque la valve est placée dans une première position I, et à la voie d'entrée C lorsque la valve est placée dans une deuxième position II.

Les voies B des valves 3x sont reliés au premier conduit principal 26 ; les voies C sont reliées au deuxième conduit principal 28.

Les voies C des valves 3x sont reliés respectivement :

- aux premières enceintes secondaires 12A, 14A des premier et deuxième moteurs élémentaires M12, M14 ;
- à la première enceinte secondaire 16A du troisième moteur élémentaire M16 ;
- à la deuxième enceinte secondaire 12B du premier moteur élémentaire M12 ;
- aux deuxièmes enceintes secondaires 14B, 16B des deuxième et troisième moteurs élémentaires M14, M16.

Ainsi, le premier moteur 12 est relié aux valves de distribution 32 et 36 constituant une première paire de valves associées au moteur 12 ; le moteur 14 de la même manière est associé aux valves 32 et 38 ; le moteur 16 est associé aux valves 34 et 38. On constate que les trois paires de valves citées précédemment sont toutes distinctes deux à deux.

Chacune des valves 3x comporte un tiroir mobile, ayant deux positions stables. La position du tiroir est commandée par la pression de la chambre de commande de la valve. Les pressions dans les chambres de commande des valves 3x sont pilotées par un système de commande non représenté du circuit de transmission hydraulique 10. Ce système de commande peut comporter une unité de commande électronique, qui impose des pressions dans les différentes chambres de commande des valves 3x par l'intermédiaire d'électrovannes.

En fonction de la position dans laquelle sont placées les valves 3x, on constate que le circuit 10 peut être opéré suivant sept cylindrées positives et sept cylindrées négatives, comme indiqué précédemment.

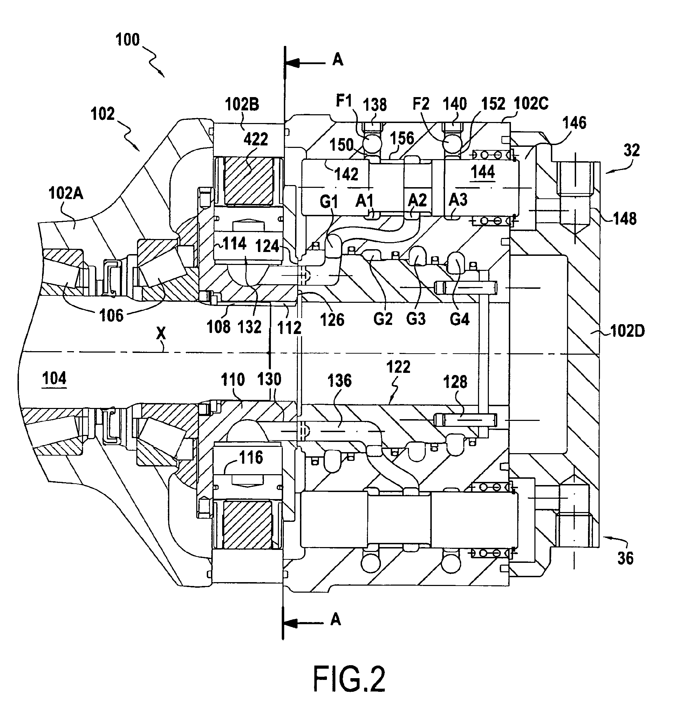

En faisant référence aux figures 2 et 3, un mode de réalisation du circuit 10 va être présenté. Dans ce mode de réalisation, le circuit 10 est comprend essentiellement un moteur 100, qui contient à la fois le distributeur 30 et les valves 3x, et les moteurs élémentaires M12, M14 et M16. La pompe 20 peut être toute pompe hydraulique de type connu et n'est pas représentée.

Le moteur hydraulique 100 comprend :

- un carter 102 constitué par quatre parties 102A, 102B, 102C et 102D assemblées par des vis non représentées;
- un arbre de sortie 104 monté à rotation, autour d'un axe géométrique X, par rapport au carter 102, au moyen de paliers à roulement coniques 106 et muni de cannelures 108 disposées sur son extrémité contenue à l'intérieur du carter 102 ;
- un bloc-cylindres 110, muni de cannelures intérieures 112, qui coopèrent avec les cannelures 108 de l'arbre de sortie 104 pour rendre solidaires en rotation ces deux pièces, ce bloc-cylindres 110 étant contenu à l'intérieur du carter 102 et comportant neuf cylindres 114 disposés radialement, régulièrement espacés angulairement ;
- des pistons 116, montés coulissants dans les cylindres 114, un par cylindre, chacun muni, à son extrémité extérieure au cylindre correspondant, d'un rouleau 118 rotatif susceptible d'être en appui sur la surface interne ondulée de la partie 102B du carter, conformée en une came 120 à six lobes ;
- le distributeur de fluide 30 cité précédemment, comprenant notamment une glace de distribution 122 comportant une face plane 124 perpendiculaire à l'axe X et en appui sur une face plane 126, également perpendiculaire à l'axe X, dont est muni le bloc-cylindres 110 ; la glace de distribution 122 étant rendue solidaire vis-à-vis de la rotation, de la partie 102C du carter, et donc de la came 120, au moyen de pions 128, et comportant en outre sur sa face radialement externe quatre gorges G1, G2, G3 et G4, coaxiales à l'axe X ;
- des conduits de cylindres 130, un par cylindre, reliant les chambres 132 délimitées par les cylindres 114 et les pistons 116 correspondant, à la face plane 126 du bloc-cylindres 110, dans laquelle ils débouchent par des orifices de cylindres régulièrement espacés, en étant centrés sur un cercle 134 coaxial à l'axe X ;
- des conduits de distribution 136 aménagés dans la glace de distribution 122, et débouchant dans la face plane 124 de celle-ci par des orifices centrés également sur le cercle 134, les conduits de distribution 136 étant au nombre de douze soit un conduit par rampe de lobe de la came, montante ou descendante ; les conduits de distribution 136 étant reliés chacun à une des gorges G1 à G4, de telle sorte que chaque conduit de cylindre 130 est amené pendant la rotation du moteur à communiquer successivement avec les conduits de distribution 136, eux-mêmes étant reliés aux différentes gorges G1, G2, G3, G4 du moteur ;
- deux gorges F1 et F2, coaxiales à l'axe X du moteur, aménagées dans le carter 102C ; la gorge F1 communiquant par un raccord 138 avec le premier conduit principal 26, et la gorge F2 communiquant par un raccord 140 avec le deuxième conduit principal 28.

Le distributeur 30 comporte en outre les quatre valves de distribution 3x citées précédemment. Ces valves 3x sont intégrées dans la partie de carter 102C autour de la glace de distribution 122.

Ces valves 3x sont identiques les unes aux autres ; pour cette raison, seule la valve 32 va être décrite (Fig.3). La valve 32 comporte :

- un alésage 142, aménagé dans la partie 102C du carter, et débouchant de part et d'autre de celui-ci suivant l'axe X ;
- un tiroir coulissant 144 de sélection de la cylindrée, monté dans l'alésage 142 ;
- une chambre de commande 146 pour le tiroir 144, aménagée dans un alésage aménagé dans la face du carter 102D située du côté du carter 102C en face de l'alésage 142, la chambre 146 recevant une extrémité du tiroir 144 et étant en outre reliée à un conduit externe non représenté par une conduite de commande 148 ;
- trois gorges A1, A2, et A3, aménagées dans la partie 102C du carter, coaxiales à l'alésage 142. Les gorges A1 et A3 sont reliées respectivement aux gorges F1 et F2 (et par ce biais, aux conduites principales 26 et 28) par des conduites de liaison 150 et 152 ;
- un ressort hélicoïdal 154, enroulé autour du tiroir 144 dans une partie élargie de l'alésage 142 ; ce ressort étant à une extrémité en appui sur le fond de ladite partie élargie, et de l'autre, étant bloqué à l'extrémité du tiroir 144 par un circlips ; le ressort 154 ayant un effet antagoniste à celui de la pression de fluide à l'intérieur de la chambre de commande 146.

Les gorges médianes A2 des valves 3x sont par ailleurs reliées respectivement aux gorges G1, G2, G3, G4.

Les valves 3x fonctionnent donc de la manière suivante : Le tiroir 144 comporte une gorge large 156 qui selon la position adoptée par le tiroir, fait communiquer la gorge médiane A2 avec l'une ou l'autre des gorges d'extrémité A1 et A3 des valves 3x. Ainsi, dans une première position (tiroir 144 sur la gauche, Fig.3), la gorge 156 du tiroir 144 met en relation les gorges A1 et A2 et donc les gorges F1 et G1. Dans une deuxième position (tiroir 144 sur la droite), la gorge 156 met en relation les gorges A2 et A3 et donc les gorges F2 et G1.

Il s'ensuit qu'en commandant la position des valves 3x, via leurs chambres de commande hydraulique 146 respectives, il est possible de mettre sélectivement en relation chacune des gorges G1 à G4 avec l'une ou l'autre des gorges F1 et F2 et donc, avec l'une ou l'autre des conduites principales 26 et 28.

L'agencement des moteurs M12, M14 et M16 indiqués précédemment au sein du moteur 100 va maintenant être précisé.

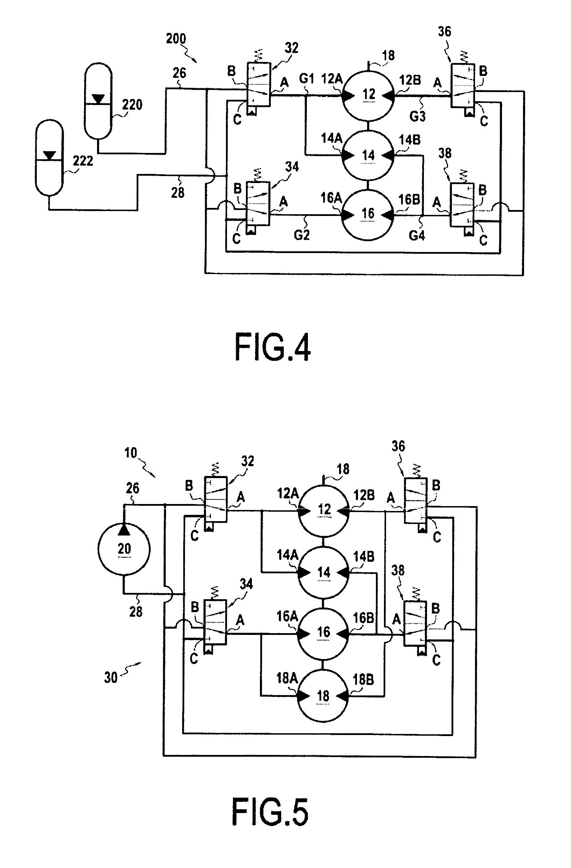

Les six lobes de la came 120 forment trois groupes de deux lobes opposés, qui délimitent respectivement les moteurs M12, M14 et M16 (Fig.2). L'alimentation et l'échappement de fluide des différents moteurs M12, M14 et M16 se font via les douze conduits de distribution 136 aménagés dans la glace de distribution 122. Chaque moteur élémentaire comprend quatre conduits de distribution 136. La répartition de ces circuits par gorge apparaît sur la figure 4, sur laquelle chacun des conduits de distribution porte la référence '136' suivie du numéro de la gorge à laquelle il est relié. On constate que les gorges 2 et 3 sont liées chacune seulement à deux conduits 1362 et 1363, alors que les gorges 1 et 4 sont liées chacune à quatre conduits 1361 et 1364.

Cet agencement des conduits de distribution 136 correspond au schéma de principe de la figure 1. On peut noter que les enceintes secondaires des moteurs élémentaires ne sont pas distinctes les unes des autres, mais correspondent aux gorges G1 à G4 : La gorge G1 correspond aux enceintes 12A et 14A, la gorge G2 à l'enceinte 16A, la gorge G3 à l'enceinte 12B, la gorge G4 aux enceintes 14B et 16B.

Le moteur 100 illustré par les figures 2 et 3 peut être opéré dans les sept cylindrées positives et sept cylindrées négatives présentées précédemment. La cylindrée utilisée dépend de la position adoptée par les différents tiroirs (144) des quatre valves 3x. Cette position dépend quant à elle des pressions de commande appliquées dans les conduits de commande (148) des différentes chambres de commande (146).

La figure 4 représente un circuit 200 qui constitue une variante du premier mode de réalisation de l'invention présenté par les figures 1 à 3. Ce circuit 200 comporte deux accumulateurs de fluide 220 et 222 à pression de gaz, de type connu en soi. Ces accumulateurs de fluide constituent respectivement une source de fluide à haute pression (accumulateur 220) et un stockage ou réceptacle de fluide sous faible pression (accumulateur 222).

A l'exception des composants de stockage/fourniture de fluide, les autres composants du circuit 200 sont identiques aux composants correspondants du circuit 10 et portent donc les mêmes références.

L'accumulateur 220 est relié à la première conduite principale 26 et permet d'injecter dans celle-ci du fluide sous pression. Le fluide s'échappant des moteurs élémentaires est retourné via la conduite 28 à l'accumulateur sous faible pression 222.

Le circuit 200 constitue donc un système de récupération d'énergie, apte à stocker de l'énergie mécanique fournie par l'arbre 18, puis à la restituer à ce même arbre. Le nombre élevé de cylindrées différentes du circuit 200 confère à ce circuit une grande souplesse de fonctionnement pour son utilisation comme système de récupération d'énergie.

La figure 5 représente un circuit de transmission 300 qui illustre le second mode de réalisation de l'invention. En effet, le circuit 300 comporte en plus des trois moteurs élémentaires 12, 14 et 16, un quatrième moteur élémentaire 18. Ce moteur élémentaire 18 présente une première enceinte secondaire 18A raccordée à la voie de sortie A de la deuxième valve 34, et une deuxième enceinte secondaire 18B raccordée à la voie de sortie A de la quatrième valve 38.

La présence du quatrième moteur élémentaire 18 permet d'obtenir des cylindrées différentes de celles d'un circuit à trois moteurs élémentaires. Cela permet que le circuit 300 présente par rapport à ce dernier circuit, d'autres rapports de cylindrées. Cela permet de plus que ses cylindrées forment ou du moins se rapprochent de suites géométriques ou arithmétiques différentes de celles du circuit comportant trois moteurs élémentaires.

Enfin, d'un point de vue technique le circuit 300 peut être réalisé sous la forme d'un moteur similaire à celui des figures 2 et 3, mais comportant huit lobes de came et douze pistons.

**Revendications**

**1.** Circuit (10) de transmission hydraulique comprenant :

- deux conduits principaux (26,28), respectivement pour l'alimentation en fluide et l'échappement de fluide ;
- trois ou quatre moteurs élémentaires hydrauliques (12,14,16,18) associés pour un même entrainement ;
- chacun desdits moteurs élémentaires présentant une première enceinte secondaire (12A,14A,16A,18A) pour une alimentation de fluide et une deuxième enceinte secondaire (12B,14B,16B,18B) pour un échappement de fluide ;

lesdits moteurs délivrant des couples de sortie de même sens lorsqu'ils sont alimentés via leurs premières enceintes secondaires respectives ;

- une première, une deuxième, une troisième et une quatrième valve de distribution (32,34,36,38 ;3x);

chacune desdites valves de distribution présentant une voie de sortie (A) et deux voies d'entrée (B,C), et étant apte à relier sélectivement la voie de sortie avec sélectivement l'une ou l'autre desdites voies d'entrée ;

lesdites deux voies d'entrée desdites valves de distribution étant reliées respectivement auxdits deux conduits principaux ;

les voies de sortie desdites première et deuxième valves étant reliées à au moins une desdites premières enceintes secondaires (12A,14A,16A,18A) des moteurs élémentaires ;

le circuit **se caractérisant en ce que**

- les voies de sortie desdites troisième et quatrième valves sont reliées à au moins une desdites secondes enceintes secondaires (12B,14B,16B,18B) des moteurs élémentaires ;

- chacun des moteurs élémentaires est relié uniquement à une paire de valves, constituée par la valve parmi les première et deuxième valve de distribution à laquelle la première enceinte secondaire du moteur considéré est reliée, et la valve parmi les troisième ou quatrième valve de distribution à laquelle la seconde enceinte secondaire du moteur considéré est reliée ;

- les paires de valves associées aux différents moteurs élémentaires sont toutes distinctes deux à deux.

2. Circuit selon la revendication 1, comprenant exactement trois moteurs élémentaires (12,14,16), et dans lequel lesdites voies de sortie desdites première, deuxième, troisième et quatrième valve de distribution sont reliées respectivement :

   - aux premières enceintes secondaires des premier et deuxième moteurs élémentaires ;
   - à la première enceinte secondaire du troisième moteur élémentaire ;
   - à la deuxième enceinte secondaire du premier moteur élémentaire ;
   - aux deuxièmes enceintes secondaires des deuxième et troisième moteurs élémentaires.

3. Circuit selon la revendication 1, comprenant exactement quatre moteurs élémentaires (12,14,16,18), et dans lequel lesdites voies de sortie desdites première, deuxième, troisième et quatrième valve de distribution sont reliées respectivement :

   - aux premières enceintes secondaires des premier et deuxième moteurs élémentaires ;
   - aux premières enceintes secondaires des troisième et quatrième moteurs élémentaires ;
   - aux deuxièmes enceintes secondaires des premier et quatrième moteurs élémentaires ;
   - aux deuxièmes enceintes secondaires des deuxième et troisième moteurs élémentaires.

4. Circuit selon la revendication 1 à 3, dans lequel lesdits moteurs élémentaires sont homocinétiques.

5. Circuit selon la revendication 1 à 4, dans lequel lesdits moteurs élémentaires sont de cylindrées différentes.

6. Circuit selon la revendication 1 à 5, dont les cylindrées non nulles constituent une suite sensiblement géométrique, en particulier lorsque le circuit comporte une pompe à plateau-came qui assure l'alimentation desdits moteurs élémentaires.

7. Circuit (200) selon la revendication 1 à 6, comportant en outre un accumulateur de fluide (220) apte à stocker une énergie mécanique transmise par lesdits moteurs élémentaires, puis à restituer ladite énergie auxdits moteurs élémentaires.

8. Circuit selon la revendication 7, dont les cylindrées non nulles constituent une suite sensiblement arithmétique.

9. Circuit selon l'une quelconque des revendications 1 à 8, dans lequel lesdits moteurs élémentaires font partie d'un même moteur hydraulique, et sont intégrés dans un carter de celui-ci.

**Patentansprüche**

1. Kreis (10) zur hydraulischen Übertragung, umfassend:

   - zwei Hauptleitungen (26, 28) für die Fluidzufuhr bzw. den Fluidauslass,
   - drei oder vier Einzelhydraulikmotoren (12, 14, 16, 18) die für einen gleichen Antrieb zugeordnet sind,
   - wobei ein jeder der Einzelmotoren einen ersten Nebenraum (12A, 14A, 16A, 18A) für eine Fluidzufuhr und einen zweiten Nebenraum (12B, 14B, 16B, 18B) für einen Fluidauslass aufweist,
   wobei die Motoren gleichsinnige Ausgangsdrehmomente liefern, wenn sie über ihre jeweiligen ersten Nebenräume versorgt werden,
   - ein erstes, ein zweites, ein drittes und ein viertes Verteilerventil (32, 34, 36, 38; 3x),
   wobei ein jedes der Verteilerventile einen Ausgangsweg (A) und zwei Eingangswege (B, C) aufweist und geeignet ist, den Ausgangsweg selektiv mit dem einen oder dem anderen der Eingangswege zu verbinden,
   wobei die beiden Eingangswege der Verteilerventile jeweils mit den beiden Hauptleitungen verbunden sind,
   wobei die Ausgangswege des ersten und des zweiten Ventils mit wenigstens einem der ersten Nebenräume (12A, 14A, 16A, 18A) der Einzelmotoren verbunden sind,
   wobei der Kreis **dadurch gekennzeichnet ist, dass**
   - die Ausgangswege des dritten und des vierten Ventils mit wenigstens einem der zweiten Nebenräume (12B, 14B, 16B, 18B) der Einzelmotoren verbunden sind,
   - ein jeder der Einzelmotoren nur mit einem Ventilpaar verbunden ist, das durch das Ventil von dem ersten und dem zweiten Verteilerventil, mit dem der erste Nebenraum des betrachteten Motors verbunden ist, sowie das Ventil von dem dritten oder dem vierten Verteilerventil, mit dem der zweite Nebenraum des betrachteten Motors verbunden ist, gebildet ist,
   - die den verschiedenen Einzelmotoren zugeordneten Ventilpaare alle paarweise getrennt sind.

2. Kreis nach Anspruch 1, der exakt drei Einzelmotoren (12, 14, 16) umfasst und wobei die Ausgangswege des ersten, des zweiten, des dritten und des vierten Verteilerventils verbunden sind mit:

   - den ersten Nebenräumen des ersten und des zweiten Einzelmotors,
   - dem ersten Nebenraum des dritten Einzelmotors,
   - dem zweiten Nebenraum des ersten Einzelmotors bzw.
   - den zweiten Nebenräumen des zweiten und des dritten Einzelmotors.

3. Kreis nach Anspruch 1, der exakt vier Einzelmotoren (12, 14, 16, 18) umfasst und wobei die Ausgangswege des ersten, des zweiten, des dritten und des vierten Verteilerventils verbunden sind mit:

   - den ersten Nebenräumen des ersten und des zweiten Einzelmotors,
   - den ersten Nebenräumen des dritten und des vierten Einzelmotors,
   - den zweiten Nebenräumen des ersten und des vierten Einzelmotors bzw.
   - den zweiten Nebenräumen des zweiten und des dritten Einzelmotors.

4. Kreis nach Anspruch 1 bis 3, wobei die Einzelmotoren homokinetisch sind.

5. Kreis nach Anspruch 1 bis 4, wobei die Einzelmotoren unterschiedliche Hubräume haben.

6. Kreis nach Anspruch 1 bis 5, dessen Hubräume ungleich null eine im Wesentlichen geometrische Folge bilden, insbesondere wenn der Kreis eine Nockenscheiben-Pumpe umfasst, die die Versorgung der Einzelmotoren sicherstellt.

7. Kreis (200) nach Anspruch 1 bis 6, ferner umfassend einen Fluidspeicher (220), der geeignet ist, eine durch die Einzelmotoren übertragene mechanische Energie zu speichern, anschließend die Energie an die Einzelmotoren zurückzugeben.

8. Kreis nach Anspruch 7, dessen Hubräume ungleich null eine im Wesentlichen arithmetische Folge bilden.

9. Kreis nach einem der Ansprüche 1 bis 8, wobei die Einzelmotoren zu einem gleichen Hydraulikmotor gehören und in ein Gehäuse dessen integriert sind.

**Claims**

1.  A hydraulic transmission circuit (10) comprising:

    - two main conduits (26, 28), respectively for supplying fluid and for discharging fluid;
    - three or four hydraulic elementary motors (12, 14, 16, 18) associated for a same drive;
    - each of said elementary motors having a first secondary enclosure (12A, 14A, 16A, 18A) for supplying fluid and a second secondary enclosure (12B, 14B, 16B, 18B) for discharging fluid;
    said motors delivering output torques in the same direction when they are fed via their first respective secondary enclosures;
    - a first, a second, a third and a fourth distribution valve (32, 34, 36, 38; 3x);
    each of said distribution valves having an outlet channel (A) and two inlet channels (B, C), and being capable of selectively connecting the outlet channel with selectively either one of said inlet channels;
    said two inlet channels of said distribution valves being connected to said two main conduits respectively;
    the outlet channels of said first and second valves being connected to at least one of said first secondary enclosures (12A, 14A, 16A, 18A) of the elementary motors;
    the circuit being **characterized in that**
    - the outlet channels of said third and fourth valves are connected to at least one of said secondary enclosures (12B, 14B, 16B, 18B) of the elementary motors;
    - each of the elementary motors is exclusively connected to a pair of valves, consisting of the valve from among the first and second distribution valve to which the first secondary enclosure of the relevant motor is connected, and the valve from among the third or fourth distribution valve to which the second secondary enclosure of the relevant motor is connected;
    - the pairs of valves associated with the different elementary motors are all distinct two by two.

2.  The circuit according to claim 1, comprising exactly three elementary motors (12, 14, 16), and wherein said outlet channels of said first, second, third and fourth distribution valve are respectively connected:

    - to the first secondary enclosures of the first and second elementary motors;
    - to the first secondary enclosure of the third elementary motor;
    - to the second secondary enclosure of the first elementary motor;
    - to the second secondary enclosures of the second and third elementary motors.

3.  The circuit according to claim 1, comprising exactly four elementary motors (12, 14, 16, 18), and wherein said outlet channels of said first, second, third and fourth distribution valve are respectively connected:

    - to the first secondary enclosures of the first and second elementary motors;
    - to the first secondary enclosures of the third and fourth elementary motors;
    - to the second secondary enclosures of the first and fourth elementary motors;
    - to the second secondary enclosures of the second and third elementary motors.

4.  The circuit according to claim 1 to 3, wherein said elementary motors are with constant velocity.

5.  The circuit according to claim 1 to 4, wherein said elementary motors are of different capacities.

6.  The circuit according to claim 1 to 5, for which the non-zero capacities form a substantially geometrical series, in particular when the circuit includes a swash plate pump which ensures the supply of said elementary motors.

7.  The circuit (200) according to claim 1 to 6, further including a fluid accumulator (220) capable of storing mechanical energy transmitted by said elementary motors, and of giving back said energy to said elementary motors.

8.  The circuit according to claim 7, for which the non-zero capacities form a substantially arithmetic series.

9.  The circuit according to any of claims 1 to 8, wherein said elementary motors are part of a same hydraulic motor, and are integrated into a case of the latter.

FIG.1

FIG.3

FIG.2

FIG.4

FIG.5

**EP 2 617 985 B1**